# EUROPEAN PATENT APPLICATION

(11) **EP 3 957 180 A1**
(43) Date of publication of application: **23.02.2022**
(21) Application number: 20191776.2
(22) Date of filing: 19.08.2020
(51) Int. Cl.: A22C 13/00

(54) **METHOD FOR ENCASING FOODSTUFF**

(71) Applicant: Hanze Food B.V., 7418 EV Deventer (NL)
(72) Inventor: Wcislo, Tomasz Wojciech, 47-220 Kedzierzyn-Kozle (PL); Hermans, Joris Frits, 3514 TJ Utrecht (NL)
(74) Representative: 't Jong, Bastiaan Jacob

(57) **Abstract**

Method for encasing foodstuff comprising the steps of:
- supplying a foodstuff filler mass;
- shaping the filler mass;
- supplying a casing mass for forming a casing;
- coating the shaped filler mass with the casing mass to form a film of casing mass;
- gelling the film;
- perforating the film.

## Description

The invention relates to a method for encasing foodstuff.

In the fabrication of sausages, it is known to encase the meat filling in a casing of natural intestine or fabricated casings of for example collagen. Intestine casings allow for water vapor to escape through the casing when the sausage is being heated, whilst keeping the filling in shape.

For example when producing vegetarian or vegan sausages, it is not acceptable to use animal derived matter such as intestine or collagen. In order to produce vegetarian or vegan sausages, or at least to produce sausage without using intestine or animal derived collagen for the casing, other forms of casings need to be used.

Such alternative method for manufacturing sausages is described in US 2008/0299264 A1. The method described therein comprises in succession the following steps: a sausage of raw sausage meat, puree, or paste is molded by being passed through a tubular mold; the mold is cut up into segments having ends that are preferably rounded; the segments are moved while being covered in a first composition containing sodium alginate so as to coat the segments in a film of this first composition; and the coated segments are put into contact with a second composition containing a calcium salt in order to cause a gel of calcium alginate to be formed, coating the segments.

A problem with the alginate casing formed by the known method, is that the casing is not permeable for water vapor or juices. When such a sausage is heated, steam is formed within the casing. Since the steam cannot escape, pressure is built up inside the casing, causing the casing to separate from the sausage. At some point, the casing may also give under the pressure. The resulting sudden expelling of steam can be dangerous. The ruptured casing furthermore doesn't hold the sausage filling together anymore, causing the sausage to fall apart. This drawback is especially pronounced in the case of vegetarian or vegan filling. While with meat sausages cross-linking between the meat and the alginate somewhat prevents separation, such adhesion is hardly obtained between the less functional or inactive proteins of vegetarian and vegan fillings.

It is an object of the invention to reduce or even remove the above mentioned disadvantages.

This object is achieved according to the invention with a method for encasing foodstuff comprising the steps of:
- supplying a foodstuff filler mass;
- shaping the filler mass;
- supplying a casing mass for forming a casing;
- coating the shaped filler mass with the casing mass to form a film of casing mass;
- gelling the film;
- perforating the film.

In contrast with fabrication of sausages using preformed casings which are stuffed with a filler mass, the method relates to a casing which is formed on the filler mass by gelling a film coated on the filler mass. The filler mass can for example be a composition comprising meat such as a meat dough or vegetarian or vegan foodstuff.

By perforating the film, the casing becomes permeable for water vapor and juices. When the sausage is cooked, no pressure buildup occurs within the casing and separation of the casing and the filler mass is highly reduced or even prevented altogether.

The step of perforating the film can be performed before the casing is set by the gelling step either partly or fully, but also after. The gelling and perforations steps can also be performed at the same time.

Another benefit of the perforations is that adhesion of the casing mass to the filling mass can be enhanced.

A further benefit of the perforations, is that an enhanced Maillard reaction can be achieved because precursors for that reaction such as amino acids and reducing sugars can come in contact and reach sufficient heat levels.

In another embodiment of a method according to the invention, the film is perforated before the step of gelling the film and/or perforated during the step of gelling the film and/or perforated after the step of gelling the film.

By perforating the film before the casing or film is fully set by the gelling step, improved adhesion of the film to the filler mass can be achieved. This is especially the case if the film is perforated by mechanical means, which causes the film to be pushed slightly into the filler mass.

The perforation can also be performed when the film has partially or fully set, for example to the point where it becomes gelled enough to be puncturable with a needle.

It can also be beneficial to perform the perforating step before and during the gelling, before and after the gelling, before, during, and after the gelling or during and after the gelling. For example to ensure a minimal perforation size or shape is achieved in the gelled film whilst maintaining the benefit of better adhesion obtained by slightly pushing the film into the filler mass.

In another embodiment of a method according to the invention, the casing mass is a composition comprising a suitable salt of alginic acid, such as for example sodium alginate, calcium alginate or magnesium alginate.

The method is very effective with sausage casings with a casing mass comprising an alginate. The film formed by coating the filling mass with a liquid casing mass comprising sodium alginate can be gelled by bringing the film into contact-for example by sprinkling or dipping-with a composition containing a calcium salt. This causes the film to gel, forming the casing.

In another embodiment of a method according to the invention, the film is obtained by co-extruding the casing mass with the filler mass.

The method can be used very well with a fabrication process where the film is formed by co-extruding the casing mass with the filler mass. After the extrusion, the gelling and perforation of the film can be performed.

Another embodiment of a method according to the invention, is a method wherein the film is perforated using mechanical cutting or perforating means such as blades or needles.

It has been found that a good result can be obtained by perforating the film by means of a mechanical action wherein the film is perforated using a needle or cutter or an array of needles and cutters. The perforating action can involve ultrasonic mechanical vibration of the needle and or cutter for improved results.

In a preferred embodiment of a method according to the invention, the film is perforated using a high-energy beam, such as an ultrasonic beam or an electromagnetic beam such as a laser beam or an electron beam.

A benefit of perforating the film using a high-energy beam, is that the perforating action doesn't cause contamination. Very consistent results can be achieved and there are no inconsistencies introduced by tool dulling. Preferably the high-energy beam does not induce heat to the filling mass, to prevent protein denaturalization.

Also according to the invention, is a method characterized in that the pitch between neighboring perforations is between 0,5-60mm, preferably between 0,5-40mm, preferably between 0,5-15mm, preferably between 5-7mm.

A benefit of the method according to the invention, is that the capacity for expelling water vapor or liquids from the casing can be controlled. The capacity can among others be controlled by varying the inter-perforation pitch. Depending on for example the water content of the filler mass and the size and shape of the shaped filler mass, a pitch between 0,5-60mm, preferably between 0,5-40mm, allows for adequate capacity to be obtained. Very good results were obtained using a pitch between 0,5-15mm. The perforations can be spread along the circumference of the foodstuff. In testing with a filling mass comprising for example poultry, good results were obtained using a pitch between 5-7mm.

Another preferred embodiment of a method according to the invention, is a method wherein the perforations are micro-perforations for allowing water vapor and juices comprised in the filler mass to pass the gelled film and to prevent the filler mass to pass the gelled film.

By using micro-perforations, the solid matter such as proteins comprised in the filler mass can be well contained while at the same time allowing water vapor and juices to be expelled from the casing. Larger perforations can more easily allow filler mass to leak out of the perforations. The size of the micro-perforations is preferably chosen depending on aspects of the filler mass, such as particle size and water content, to ensure that good capacity for expelling water vapor is achieved while preventing unwanted passing of filler mass through the perforations. Testing has shown that casings formed by perforating the film with perforations with an aperture of approximately 50000µm² perform both functions of allowing water vapor to escape and keeping the shaped filler mass in form very well.

In a further embodiment of a method according to the invention, the micro-perforations are 10-1000µm holes, preferably 100-500µm holes.

For different kinds of filler mass, ranging from meat-comprising to vegan, it has been found that holes with a diameter in the range of 10-1000µm provide a good vapor expelling capacity while maintaining the other aspects of the casing, especially in the range of 100-500µm.

Also according to the invention, is an embodiment of a method wherein the micro-perforations are slotted with a width in the range of 10-1000µm, preferably a width of 50µm and a length in the range of 1000-5000µm, preferably a length of 1000µm.

The micro-perforations can be irregularly shaped, for example in the form of slots. The size of the perforations can be varied to change the capacity for expelling water vapor. Depending on the strength of the gelled film, larger perforations can be used without sacrificing the strength of the film to an extent where the shaped filler mass can not be effectively maintained by the casing.

Also an embodiment of a method according to the invention is the method for the manufacture of sausages.

The method is very suitable for cases where the foodstuff is a sausage. The method is suitable for the continuous manufacture of encased sausages.

These and other features of the invention will be elucidated in conjunction with the accompanying drawings.
Figures 1a-1d show schematic cross-sections of foodstuff during several steps of a method according to the invention.
Figure 2 schematically depicts a step of co-extruding the filler mass with the casing mass.

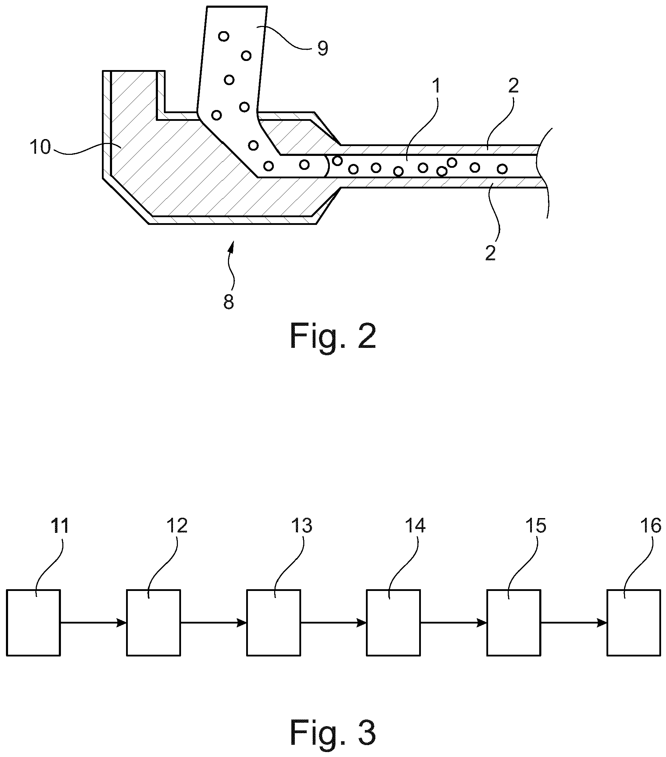

Figure 2 shows a flow diagram of an embodiment of a method according to the invention.

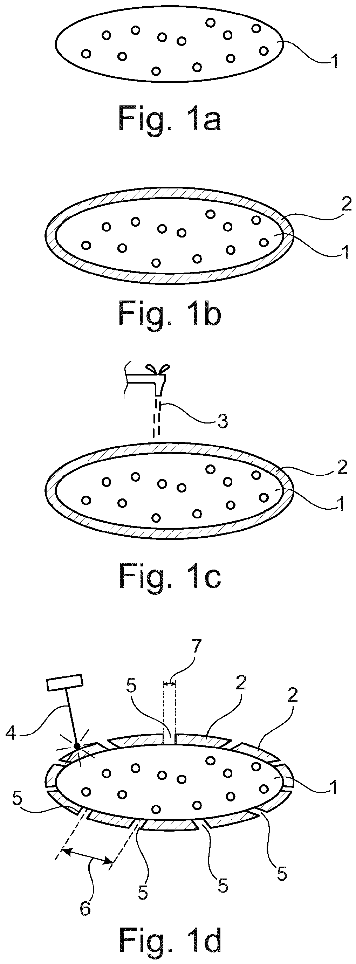

In figure 1a, a shaped filler mass 1 is shown. The filler mass 1 can be formed by passing it through a tubular mold and cutting the resulting tubular filler mass 1 to length.

In figure 1b the shaped filler mass 1 is coated with a film 2 of casing mass. The casing mass is a composition comprising an alginate such as for example sodium alginate.

In figure 1c the step of gelling the film 2 is shown, by sprinkling the film 2 with a second composition 3 comprising a calcium salt solution.

In figure 1d the step of perforating the film 2 by means of a laser beam 4 is shown. The resulting perforations 5 have an inter-perforation pitch 6, measured between neighboring perforations 5. The perforations have a diameter 7 measured across the perforation 5.

In figure 2 a cross-sectional view of a schematically depicted co-extrusion head 8 is shown. The filler mass 9 is co-extruded with the casing mass 10 to form a shaped filler mass 1 coated with a film 2.

In figure 3 a flow diagram 11 is shown for an embodiment of a method according to the invention. In the first step 11 a foodstuff filler mass is supplied, which is consecutively shaped in the second step 12. In the third step 13 a casing mass is supplied for forming a casing. In the fourth step 14 the shaped filler mass is coated with the casing mass to form a film of casing mass. In the fifth step 15 the film is gelled. In the sixth step 15 the gelled film is perforated.

## Claims

1. Method for encasing foodstuff comprising the steps of:
- supplying a foodstuff filler mass;
- shaping the filler mass;
- supplying a casing mass for forming a casing;
- coating the shaped filler mass with the casing mass to form a film of casing mass;
- gelling the film;
- perforating the film.

2. Method according to claim 1, **characterized in that** the film is perforated before the step of gelling the film and/or perforated during the step of gelling the film and/or perforated after the step of gelling the film.

3. Method according to claim 1 or 2, **characterized in that** the casing mass is a composition comprising a suitable salt of alginic acid, such as for example sodium alginate, calcium alginate or magnesium alginate.

4. Method according to any of the foregoing claims, **characterized in that** the film is obtained by co-extruding the casing mass with the filler mass.

5. Method according to any of the foregoing claims, **characterized in that** the gelled film is perforated using mechanical cutting or perforating means such as blades or needles.

6. Method according to any of the foregoing claims, **characterized in that** the film is perforated using a high-energy beam, such as an ultrasonic beam or an electromagnetic beam such as a laser beam or an electron beam.

7. Method according to any of the foregoing claims, **characterized in that** the pitch between neighboring perforations is between 0,5-60mm, preferably between 0,5-40mm, preferably between 0,5-15mm, preferably between 5-7mm.

8. Method according to any of the foregoing claims, **characterized in that** the perforations are micro-perforations for allowing water vapor and juices comprised in the filler mass to pass the gelled film and to prevent the filler mass to pass the gelled film.

9. Method according to claim 8, **characterized in that** the micro-perforations are 10-1000µm holes,
preferably 100-500µm holes.

10. Method according to claim 8, **characterized in that** the micro-perforations are slotted with a width in the range of 10-1000µm, preferably a width of 50µm and a length in the range of 1000-5000µm, preferably a length of 1000µm.

11. Method according to any of the foregoing claims for the manufacture of sausages.
